# EUROPÄISCHE PATENTANMELDUNG

(11) **EP 4 123 193 A1**
(43) Veröffentlichungstag der Anmeldung: **25.01.2023**
(21) Anmeldenummer: 22184702.3
(22) Anmeldetag: 13.07.2022
(51) Int. Cl.: F16D 55/2265, F16D 55/227, F16D 55/00

(54) **SCHEIBENBREMSE FÜR EIN NUTZFAHRZEUG**

(30) Priorität: 23.07.2021 DE 102021119146
(71) Anmelder: KNORR-BREMSE Systeme für Nutzfahrzeuge GmbH, 80809 München (DE)
(72) Erfinder: ASEN, Alexander, 94428 Eichendorf (DE); HABERMANN, Dimitrij, 94569 Stephansposching (DE); EICHLER, Thomas, 80803 München (DE); MARKL, Michael, 94508 Schöllnach (DE)

(57) **Zusammenfassung**

Eine Scheibenbremse für ein Nutzfahrzeug, mit einem eine Bremsscheibe übergreifenden Bremssattel, der an einem ortsfesten Bremsträger (1) durch zwei Führungsholme (2) verschiebbar gehalten ist, wobei jeder Führungsholm (2) eine mit dem Bremsträger (1) mittels einer in eine Gewindebohrung (7) des Bremsträgers (1) eingedrehten Schraube (4) verbundene Führungsbuchse (3) aufweist, die verdrehsicher am Bremsträger (1) gehalten ist und die mit einem angeformten Bündchen (6) in einer Senkung (9) der Gewindebohrung (7) einliegt, ist so ausgebildet, dass die aus einem härteren Material als der Bremsträger (1), vorzugsweise aus gehärtetem Stahl, bestehende Führungsbuchse (3) auf ihrem dem Bündchen (6) zugeordneten mantelseitigen Randbereich mindestens eine, zum Bremsträger (1) hin offene Ausnehmung (8) aufweist, in die durch den Anpressdruck der Schraube (4) Material des Bremsträgers (1) eingedrückt ist.

## Beschreibung

Die Erfindung betrifft eine Scheibenbremse für ein Nutzfahrzeug gemäß dem Oberbegriff des Anspruchs 1.

Bei einer derartigen Scheibenbremse, die auch als Schiebesattel-Scheibenbremse bekannt ist, ist der Bremssattel relativ verschiebbar an einem fahrzeugseitigen Bremsträger gehalten, wozu Führungsholme vorgesehen sind, die jeweils aus einer Führungsbuchse und einer darin geführten, in eine Gewindebohrung des Bremsträgers eingedrehten Schraube besteht.

Dabei ist die Führungsbuchse mit einem endseitig angeformten Bündchen in eine Senkung der Gewindebohrung des Bremsträgers eingefügt, während die dem Bündchen benachbarte, ringförmige Anlagefläche der Führungsbuchse an der Außenseite des Bremsträgers anliegt, wobei als Schraube eine hochfeste Schraube Verwendung findet, die unter Vorspannung die Führungsbuchse an den Bremsträger anpresst.

Vielfach kommen jedoch Bremsträger zum Einsatz, deren den Führungsholmen zugewandte Oberfläche mit einer reibwertreduzierenden Beschichtung versehen ist, beispielsweise aus Zinkphosphat.

Allerdings erhöht sich damit, aufgrund des verminderten Reibschlusses zwischen der Führungsbuchse und dem Bremsträger das Risiko einer Verdrehung der Führungsbuchse, die zu einem Verlust der Vorspannkraft der Schraube und letztendlich zu deren Lösen führen kann.

Daraus ergibt sich eine Einschränkung der Betriebs- bzw. der Funktionssicherheit der Scheibenbremse insgesamt, da ein Lösen der Verschraubung in letzter Konsequenz zu einem Totalausfall der Bremse führt. Eine Scheibenbremse ist ein sicherheitsrelevantes Bauteil, so dass diese Gefährdung nicht hinnehmbar ist.

Um hier Abhilfe zu schaffen, ist in der DE 10 2013 109 673 A1 vorgeschlagen, zwischen der Führungsbuchse und dem Bremsträger ein Sicherungselement in Form von zwei Keilsicherungsscheiben anzuordnen, deren umfängliche Keilflächen im Sinne einer Verzahnung ineinander greifen.

Zwar wird durch diese Konstruktion eine Verdrehsicherung erreicht, die allerdings nicht durch Form-, sondern durch Reibschluss erzielt wird, wobei die dem Führungsholm zugewandte Seite des Bremsträgers mit der anliegenden Seite der einen Keilsicherungsscheibe eine Reibpaarung und die Stirnseite der Führungsbuchse mit der anliegenden Seite der anderen Keilsicherungsscheibe eine weitere Reibpaarung bilden.

Nachteilig bei dieser Ausgestaltung ist überdies, dass zusätzliche Bauteile, nämlich die besagten Keilsicherungsscheiben, erforderlich sind, deren Beschaffung mit weiteren Kosten verbunden ist, was dem steten Bemühen einer Kostenoptimierung entgegensteht.

Der Erfindung liegt die Aufgabe zugrunde, eine Scheibenbremse der gattungsgemäßen Art so weiterzuentwickeln, dass ihre Funktions- und Betriebssicherheit mit geringem konstruktivem und fertigungstechnischem Aufwand verbessert wird.

Diese Aufgabe wird durch eine Scheibenbremse mit den Merkmalen des Anspruchs 1 gelöst.

Durch die Erfindung ist eine Verdrehsicherung der Führungsbuchse durch Formschluss erreicht, die unabhängig von der Oberflächenbeschaffenheit des Bremsträgers wirksam ist. Dies betrifft insbesondere die zum Stand der Technik beschriebene reibwertreduzierende Beschichtung der Oberfläche des Bremsträgers.

Durch den hergestellten Formschluss bleibt die Vorspannung der Schraube auch dann unverändert, wenn betriebsbedingte Biegebeanspruchungen auf den Führungsholm einwirken, vor allem durch Verformungen aufgrund auftretender Belastungen im Fahrbetrieb. In jedem Fall ist ausgeschlossen, dass sich die Schraubverbindung löst, so dass die zum Stand der Technik der beschriebenen Probleme wirksam verhindert werden.

Entscheidend für die Herstellung des Formschlusses ist, dass die Führungsbuchse aus einem härteren Material, vorzugsweise aus gehärtetem Stahl, als der Bremsträger besteht, so dass bei einem entsprechenden Anziehmoment das Material des Bremsträgers im Anlagebereich mit der Führungsbuchse derart plastisch verformt wird, dass dieses Material in die Ausnehmungen der Führungsbuchse gelangt.

Gemäß der Erfindung ist die mindestens eine, vorzugsweise mehrere Ausnehmungen, die zum Bremsträger hin offen sind, auf dem dem Bündchen benachbarten mantelseitigen Randbereich vorgesehen, wobei diese mehreren Ausnehmungen abständig zueinander angeordnet sind.

Nach einer vorteilhaften Weiterbildung der Erfindung sind die Ausnehmungen als tangential geführte Ausschnitte ausgebildet, also mit einer geraden planebenen Rückwand. Bevorzugt sind die Ausnehmungen in gleichem Winkelabstand zueinander angeordnet, so dass sich beispielsweise im weitesten Sinn eine Mehrkant-, insbesondere eine Sechs-Kant-Kontur ergibt.

Da die Anlagefläche der Führungsbuchse am Bremsträger durch die Ausnehmungen reduziert ist, ergibt sich eine deutlich höhere Flächenpressung, die dazu führt, dass sich diese Anlagefläche praktisch in den Bremsträger sozusagen eingräbt und damit eine formschlüssige Verbindung an der Außenseite der Führungsbuchse bildet.

Prinzipiell sind auch andere Geometrien der Ausnehmungen denkbar, in jedem Fall jedoch derart, dass sich in dem mantelseitigen Randbereich der Führungsbuchse eine Unterbrechung der kreisrunden Querschnittsform ergibt.

Als besonderer Vorteil der Erfindung ist auch anzusehen, dass die Führungsbuchse mit geringem fertigungstechnischem Aufwand zu realisieren ist, was insoweit bedeutsam ist, als Scheibenbremsen als Serienteile in großen Stückzahlen hergestellt werden. Die Erfindung erfüllt daher in hohem Maße die Forderungen nach einer Kostenoptimierung.

Hierzu trägt auch bei, dass die erfindungsgemäße Führungsbuchse nachträglich in bereits montierte Bremsträger eingebaut werden kann, so dass eine entsprechende Scheibenbremse praktisch nachgerüstet werden kann, zumal keine besondere Bearbeitung des Bremsträgers hierzu erforderlich ist. Auch der nun mögliche Verzicht separater Sicherungsmittel, wie die zum Stand der Technik beschriebenen Keilsicherungsscheiben, führt zu einer Kostenminimierung.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Bremsträger mit montierten Führungsholmen in einer perspektivischen Ansicht
- Figur 2: einen Teilausschnitt des Bremsträgers mit Führungsholm gemäß der Figur 1 in einer geschnittenen Seitenansicht
- Figur 3: eine Seitenansicht der Verbindung des Führungsholms mit dem Bremsträger
- Figur 4: einen erfindungsgemäßen Führungsholm in einer perspektivischen Vorderansicht
- Figur 5: den Führungsholm nach Figur 4 in einer Vorderansicht.

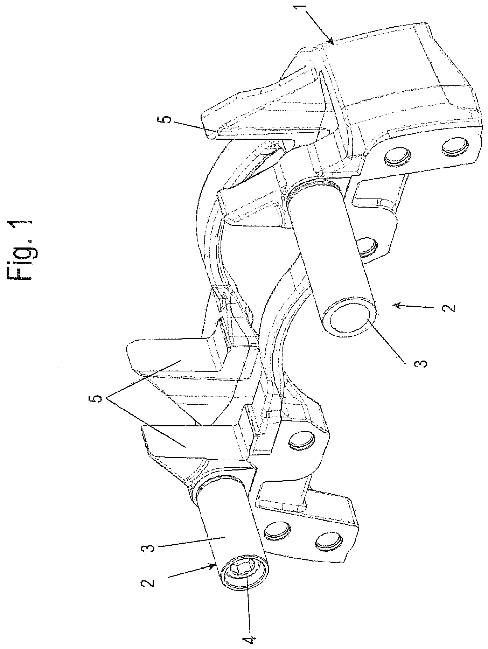

In der **Figur 1** ist ein in Funktion ortsfest an einem Fahrzeug gehaltener Bremsträger 1 dargestellt, der sich gegenüberliegende Bremsträgerhörner 5 aufweist, an denen nicht gezeigte Bremsbeläge anliegen.

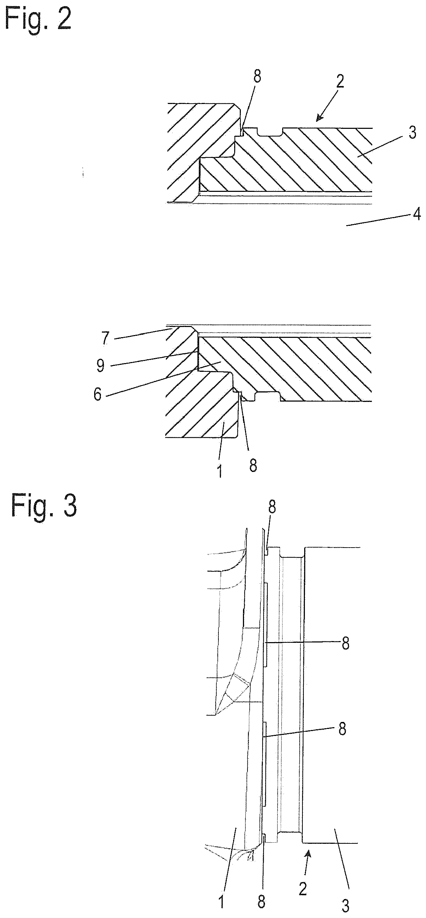

An zwei sich fluchtend gegenüberliegenden Bremsträgerhörnern 5 sind Führungsholme 2 befestigt, wozu durch eine Führungsbuchse 3 des Führungsholms 2 eine Schraube 4 geführt ist, die in eine Gewindebohrung 7 **(****Figur 2****)** des zugeordneten Bremsträgerhorns 5 eingedreht ist.

Auf diesen Führungsholmen 2 ist axial verschiebbar ein nicht dargestellter Bremssattel gelagert, wobei ein solcher Bremssattel auch als Schiebesattel bekannt ist.

Als Schraube 4 kommt bevorzugt eine Innensechskantschraube zum Einsatz, die mit ihrem Kopf in einer Senkung der Führungsbuchse 3 einliegt.

Gemäß der Erfindung besteht die Führungsbuchse 3 aus einem härteren Material als der Bremsträger 1, bevorzugt aus gehärtetem Stahl.

Auf ihrer dem Bremsträger 1 zugewandten Stirnseite weist die Führungsbuchse 3, wie in der Figur 2 sehr deutlich zu erkennen ist, ein durchmesserkleineres Bündchen 6 auf, das in einer Senkung 9 der Gewindebohrung 7 einliegt.

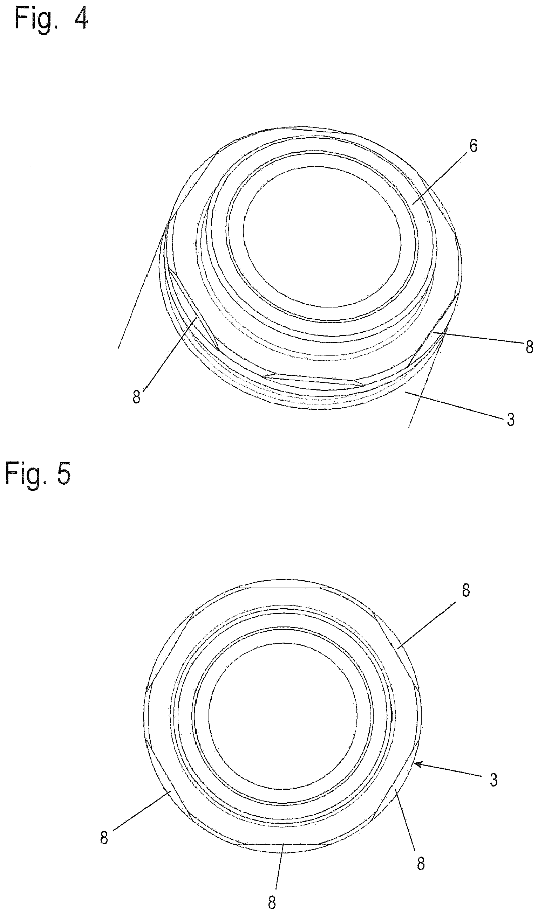

Auf dem dem Bündchen 6 zugeordneten mantelseitigen Randbereich der Führungsbuchse 3 sind mehrere, abständig zueinander angeordnete, zum Bremsträger 1 hin offene Ausnehmungen 8 vorgesehen, die besonders deutlich in den Figuren 4 und 5 erkennbar sind.

Durch den Anpressdruck der Schraube 4 ist Material des Bremsträgers 1 eingedrückt, wodurch ein Formschluss gebildet ist, der verhindert, dass sich die Führungsbuchse 3, beispielsweise durch im Fahrbetrieb auftretende Erschütterungen, verdreht und damit gegebenenfalls die Schraube 4 lockert.

In den **Figuren 4 und 5** ist die Führungsbuchse 3 als Einzelheit erkennbar. Darin ist zu sehen, dass die im Beispiel sechs Ausnehmungen 8 jeweils tangential zum Mantel der Führungsbuchse 3 verlaufen, so dass sich eine unrunde, im weitesten Sinn als Sechskant zu bezeichnende Kontur ergibt.

Anstelle der tangentialen Formgebung der Ausnehmungen 8 sind auch andere Formen denkbar, wobei in jedem Fall entscheidend ist, dass die Ausnehmungen 8 zur Stirnseite der Führungsbuchse 3 ebenso zum Mantel hin offen sind.

Die in den Figuren 4 und 5 gezeigten Ausnehmungen 8 sind gleich ausgebildet, können jedoch hinsichtlich ihrer Form auch unterschiedlich sein. Ebenso kann statt einer geraden Anzahl von Ausnehmungen 8 die Anzahl ungerade sein

Die **Figur 3** zeigt in einem Teilausschnitt den montierten Führungsholm 2 in einer Seitenansicht, wobei besonders deutlich die Anordnung der Ausnehmungen 8 zu erkennen ist.

### BEZUGSZEICHENLISTE

- 1: Bremsträger
- 2: Führungsholm
- 3: Führungsbuchse
- 4: Schraube
- 5: Bremsträgerhorn
- 6: Bündchen
- 7: Gewindebohrung
- 8: Ausnehmung
- 9: Senkung

## Patentansprüche

1. Scheibenbremse für ein Nutzfahrzeug, mit einem eine Bremsscheibe übergreifenden Bremssattel, der an einem ortsfesten Bremsträger (1) durch zwei Führungsholme (2) verschiebbar gehalten ist, wobei jeder Führungsholm (2) eine mit dem Bremsträger (1) mittels einer in eine Gewindebohrung (7) des Bremsträgers (1) eingedrehten Schraube (4) verbundene Führungsbuchse (3) aufweist, die verdrehsicher am Bremsträger (1) gehalten ist und die mit einem angeformten Bündchen (6) in einer Senkung (9) der Gewindebohrung (7) einliegt,
**dadurch gekennzeichnet, dass**
die aus einem härteren Material als der Bremsträger (1), vorzugsweise aus gehärtetem Stahl, bestehende Führungsbuchse (3) auf ihrem dem Bündchen (6) zugeordneten mantelseitigen Randbereich mindestens eine, zum Bremsträger (1) hin offene Ausnehmung (8) aufweist, in die durch den Anpressdruck der Schraube (4) Material des Bremsträgers (1) eingedrückt ist.

2. Scheibenbremse nach Anspruch 1,
**dadurch gekennzeichnet, dass**
mehrere, abständig zueinander angeordnete Ausnehmungen (8) vorgesehen sind.

3. Scheibenbremse nach Anspruch 1 oder 2,
**dadurch gekennzeichnet, dass**
die Ausnehmungen (8) in gleichem Winkelabstand zueinander angeordnet sind.

4. Scheibenbremse nach einem der vorstehenden Ansprüche,
**dadurch gekennzeichnet, dass**
die Ausnehmungen (8) jeweils als tangential ausgerichteter Ausschnitt ausgebildet ist.

5. Scheibenbremse nach einem der vorstehenden Ansprüche,
**dadurch gekennzeichnet, dass**
die Ausnehmungen (8) gleich oder unterschiedlich ausgebildet sind.

6. Scheibenbremse nach einem der vorstehenden Ansprüche,
**dadurch gekennzeichnet, dass**
die Ausnehmungen (8) in einer geraden oder ungeraden Anzahl vorgesehen sind.

7. Scheibenbremse nach einem der vorstehenden Ansprüche,
**dadurch gekennzeichnet, dass**
die an die Ausnehmungen (8) angrenzende Stirnfläche der Führungsbuchse (3) an der Außenseite des Bremsträgers (1) anliegt.
